# EUROPÄISCHE PATENTANMELDUNG

(11) **EP 0 822 435 A1**
(43) Veröffentlichungstag der Anmeldung: **04.02.1998**
(21) Anmeldenummer: 96120871.7
(22) Anmeldetag: 24.12.1996
(51) Int. Cl.: G02B 21/00

(54) **Verfahren und Vorrichtung zur optischen Rasternahfeldmikroskopie an Probekörpern in Flüssigkeiten**

(30) Priorität: 03.08.1996 DE 19631498
(71) Anmelder: HÜLS AKTIENGESELLSCHAFT, 45764 Marl (DE)
(72) Erfinder: Mertesdorf, Michael, 10138 Berlin (DE); Kirstein, Stefan, Dr., 12437 Berlin (DE); Schönhoff, Monika, Dr., 22457 Lund (SE); Lohr, Frauke, 45657 Recklinghausen (DE)

(57) **Zusammenfassung**

Herkömmliche Methoden zur Rasternahfeldmikroskopie an Probekörpern in Flüssigkeit setzen das Vorhandensein einer ausreichend glatten, reflektierenden Probenoberfläche zur Detektion der Schwingungsbewegung der Lichtleitfaserspitze und damit zur Abstandsregelung zwischen Spitze und Oberfläche voraus.

Durch das erfindungsgemäße Verfahren, bei dem die Schwingungsbewegung vorzugsweise mit Hilfe eines weitgehend parallel zur Probenoberfläche verlaufenden Lichtstrahls ohne Reflexion an der Probenoberfläche detektiert wird, können beliebige Proben in nahezu jeder Flüssigkeit untersucht werden.

Untersuchen von durch die Flüssigkeit an der Probenoberfläche hervorgerufenen Veränderungen.

## Beschreibung

Die vorliegende Erfindung betrifft ein Verfahren zur Detektion der Schwingungsbewegung bei der optischen Rasternahfeldmikroskopie, wodurch Proben, wie z. B. Festkörperoberflächen, organische dünne Schichten oder biologische Spezies, in nahezu beliebigen Flüssigkeiten untersucht werden konnen. Die zu untersuchende Probe wird dabei lokal mit Licht bestrahlt, die Reflexions-, Transmissions-, Fluoreszenz-oder Absorptionscharakteristik der Probe analysiert und durch Rastern ein Bild erzeugt. Mit dem erfindungsgemäßen Verfahren lassen sich bei der Rasternahfeldmikroskopie neben der Topographie einer an eine Flüssigkeit angrenzenden Probe darüber hinaus auch an der Probengrenzfläche ablaufende Prozesse, die eine Änderung der Topographie oder der Reflexion, Transmission, Fluoreszenz bzw. Absorption zur Folge haben, in situ verfolgen.

Die Rasternahfeldmikroskopie beruht auf dem Prinzip, eine sehr kleine Lichtöffnung als Sonde im Nahfeld, d.h. im Abstand von einigen Nanometern, an die zu untersuchende Probe heranzuführen. Diese kleine Öffnung wird durch eine Lichtleitfaser aus Glas realisiert, die zu einer ultradünnen Spitze gezogen und in der Regel mit einem undurchsichtigen Metall bedampft wird, so beschrieben in US 5 485 536. Die Spitze kann als sehr kleine Lichtquelle dienen, indem man am anderen Ende der Faser Licht in sie hinein koppelt, oder auch als Detektor, indem Licht von der Probe durch die kleine Öffnung in die Faser eingekoppelt und am anderen Ende detektiert wird. Durch Rastern der Sonde über die Probenoberfläche läßt sich so eine Abbildung der Probe sowohl in Transmission als auch in Reflexion erzeugen. Hierdurch werden das Beugungslimit eines konventionellen Lichtmikroskops umgangen und die Auflösung erheblich verbessert.

Die beschriebene Methode erlaubt optische Mikroskopie, inklusive der üblichen Kontrastverfahren wie Polarisations- oder Fluoreszenzkontrast, und simultane Topographiemessung mit einer Auflösung von 50 nm und weniger. Hierdurch lassen sich zum Beispiel Proteine und andere zelluläre Strukturen hochaufgelöst abbilden, wobei von der Probe emittiertes Fluoreszenzlicht die bildgebende Information darstellt, wie in US 5 479 024 beschrieben.

Für eine definierte lokale Beleuchtung der Probe ist es notwendig, daß der Abstand zwischen der Spitze und der Probe während des Rasterns konstant gehalten wird. Hierzu wird üblicherweise die Spitze der Lichtleitfaser parallel zur Oberfläche nahe ihrer Resonanzfrequenz in Schwingung versetzt, wobei ausgenutzt wird, daß bei einer Annäherung der Spitze an die Probe aufgrund von Wechselwirkungen einerseits die Schwingungsamplitude in Abhängigkeit des Abstands zwischen Spitze und Probe gedämpft und andererseits eine Phasenverschiebung hervorgerufen wird. Durch eine fortlaufende Abfrage des Schwingungssignals kann über eine Rückkopplung eine gleichbleibende Stärke der Wechselwirkungen eingestellt und somit ein konstanter Abstand der Spitze zur Probe gewährleistet werden, so beschrieben von E. Betzig et al. in Appl. Phys. Lett. 60 (20), S. 2484 bis 2486, 1992. WO 95/15480 beschreibt ein hierzu geeignetes Verfahren zur Detektion der Schwingungsbewegung einer beliebigen Meßsonde in Luft.

Von besonderem wissenschaftlichen, aber auch kommerziellen Interesse sind Untersuchungen an Probekörpern in Flüssigkeiten, um z. B. an der Probengrenzfläche ablaufende Prozesse beobachten zu können.

Eine Möglichkeit, Rasternahfeldmikroskopie in Flüssigkeiten zu betreiben und somit eine Denaturierung biologischer Proben zu vermeiden, ist in EP 0 701 102 A1 beschrieben. Hierin wird die Konstruktion einer Spitze beschrieben, die gebogen ist und sich ähnlich wie ein Cantilever verhält, wie er in der Rasterkraftmikroskopie verwendet wird. Diese Spitze wird seitlich in eine Meßzelle eingeführt, die aus einem Probenhalter und einer durchsichtigen Deckplatte besteht, wobei beide durch die Oberflächenspannung der Flüssigkeit zusammengehalten werden. Das Mikroskop wird wie ein Rasterkraftmikroskop betrieben.

Das in EP 0 701 102 A1 beschriebene Vorgehen zur Rasternahfeldmikroskopie in Flüssigkeiten setzt voraus, daß die Flüssigkeit nur durch ihre Oberflächenspannung auf der Probe gehalten wird. Dies ist zum Beispiel bei wäßrigen Systemen der Fall; bei Flüssigkeiten, deren Oberflächenspannung zu gering hierfür ist, zum Beispiel Tensidlösungen, ist diese Methode nicht anwendbar.

Eine weitere Möglichkeit, Rasternahfeldmikroskopie in Flüssigkeiten zu betreiben, ist von Moyer et al. in Appl. Phys. Lett. 68 (24) 1996, S. 3380-3382, beschrieben. Die zu untersuchende Probe wird hierbei auf den Boden eines speziell konstruierten Glasgefäßes gelegt. Zur Messung werden sowohl die Spitze als auch die Probe vollständig in die Flüssigkeit getaucht. Auf diese Weise ist auch hier eine abstandsabhängige Veränderung des Schwingungssignals der Spitze bei einer Annäherung an die Probe beobachtbar, wobei die Bewegung der Spitze wie nachfolgend beschrieben detektiert wird: Ein Laserstrahl wird unter einem schrägen Einfallswinkel durch die Flüssigkeit auf die Probe gestrahlt und an dieser reflektiert. Die Spitze befindet sich im Strahlengang, so daß ihre Schwingungsamplitude am Detektor gemessen werden kann. Bei diesem Aufbau müssen die gegenüberliegenden Wände des eckigen Glasgefäßes unter einem bestimmten Winkel angeordnet sein, der den beschriebenen Strahlengang zuläßt.

Vor allem aber wurde gefunden, daß diese Art der Detektion das Vorhandensein einer ausreichend glatten, reflektierenden Oberfläche voraussetzt, da eine Signaldetektion bei zu starker Streuung des reflektierten Strahls nicht möglich ist. Aus diesem Grund sind rauhe Proben und solche, deren Topographie sich durch die Einwirkung der Flüssigkeit während der Messung ändert, nicht mit der Methode von Moyer et al. zugänglich. Der vorliegenden Erfindung liegt daher die Aufgabe zugrunde, die optische Rasternahfeldmikroskopie von Proben mit beliebiger Oberflächenbeschaffenheit in möglichst beliebigen Flüssigkeiten zu ermöglichen.

Diese Aufgabe wird erfindungsgemäß gelöst gemäß den Patentansprüchen 1 bis 8 durch ein Verfahren zur optischen Rasternahfeldmikroskopie an Probekörpern in Flüssigkeiten unter Verwendung einer lateral schwingenden, in die Flüssigkeit eintauchenden Lichtleitfaserspitze, deren Abstand von der zu untersuchenden Probenoberfläche durch Detektion der Schwingungsbewegung der Lichtleitfaserspitze geregelt wird, das dadurch gekennzeichnet ist, daß der Lichtstrahl einer Lichtquelle ohne Reflexion an der Probenoberfläche durch ein die vorgelegte Probe und die Flüssigkeit enthaltendes Gefäß geleitet wird, wobei er aufdie Spitze der Lichtleitfaser fokussiert ist, und daß die Schwingungsbewegung der Spitze anhand des Beugungsbildes des Lichtstrahls hinter der Spitze mittels eines Lichtdetektors detektiert wird, wobei die vorgelegte Flüssigkeit und das Gefäß durchlässig für Licht der Wellenlänge der eingesetzten Lichtquelle sind. Gegenstand der Erfindung ist darüber hinaus gemäß der Patentansprüche 9 bis 13 eine Vorrichtung zur optischen Rasternahfeldmikroskopie an Probekörpern in Flüssigkeiten in einem Gefäß unter Verwendung einer lateral schwingenden, in die Flüssigkeit eintauchenden Lichtleitfaserspitze, wobei der Abstand zwischen Spitze und Probenoberfläche durch Detektion der Schwingungsbewegung der Spitze geregelt wird, die gekennzeichnet ist durch eine Lichtquelle, deren Licht ohne Reflexion an der Probenoberfläche durch das Gefäß geleitet wird und dabei auf die Spitze der Lichtleitfaser fokussiert ist sowie einen Lichtdetektor, der das hinter der schwingenden Spitze entstehende Beugungsbild detektiert, wobei die Flüssigkeit und das Gefäß durchlässig für Licht der Wellenlänge der eingesetzten Lichtquelle sind.

Durch die erfindungsgemäße Entkopplung des die Schwingungsbewegung detektierenden Lichtstrahls von der zu untersuchenden Probenoberfläche und die erfindungsgemäße Konstruktion der Meßzelle ist es überraschenderweise gelungen, die Rasternahfeldmikroskopie auch für nicht glatte, nicht reflektierende Probenoberflächen in beliebigen Flüssigkeiten anwendbar zu gestalten und damit vielfältige neue Anwendungsmöglichkeiten zu eröffnen. Der zur Detektion der Schwingungsbewegung eingesetzte Lichtstrahl wird dabei gegebenenfalls nach Umlenkung (nicht jedoch Reflexion an der Probe) vorzugsweise senkrecht zur ruhenden Lichtleitfaserachse und damit weitgehend parallel zur makroskopischen Probenoberfläche durch das Probengefäß und die Flüssigkeit geführt, wobei er auf die Spitze der Lichtleitfaser fokussiert ist. Durch die Bewegung der Lichtleitfaserspitze in der Flüssigkeit wird ein Beugungsbild erzeugt, das - bevorzugt nach Austritt aus dem Gefäß und gegebenenfalls nach erneuter Umlenkung vorzugsweise außerhalb des Gefäßes - mit Hilfe eines Lichtdetektors auf herkömmliche Weise detektiert werden kann, wodurch die Bewegung der Spitze verfolgt werden kann. Es wurde gefünden, daß eine lichtdurchlässige Flüssigkeit unabhängig von ihren sonstigen physikalischen Eigenschaften die Detektionsmöglichkeit der Schwingungsbewegung zuläßt. Aus dem erfaßten Signal wird vorzugsweise nicht die Phasenverschiebung, sondern die Schwingungsamplitude der Lichtleitfaserspitze ermittelt, die so bevorzugt als Regelgröße für die Abstandsregelung zwischen Spitze und Probenoberfläche dient. Wie eingangs bereits beschrieben, wird auch hier in der Flüssigkeit die Amplitude der konstant erregten Schwingung der Lichtleitfaserspitze aufgrund von Wechselwirkungen in Abhängigkeit des Abstands zwischen Spitze und Probe gedämpft. Mit Hilfe des detektierten Schwingungsamplitudensignals ist so eine konstante Abstandsregelung zwischen Probe und Spitze beim Abrastern der zu untersuchenden Probenoberfläche möglich. Der Abstand kann dabei durch Lageänderung der Spitze und/oder der Probe eingestellt werden.

Vorzugsweise beträgt der Abstand zwischen Spitze und Probe bei der Rasternahfeldmikroskopie etwa 5 bis 10 nm, wobei die Spitze der Lichtleitfaser einen Durchmesser von 10 bis 100 nm besitzt. Die Größe der Schwingungsamplitude der Spitze beträgt im allgemeinen bis zu 5 nm. Die Schwingung wird mit der gewünschten Amplitude vorzugsweise mit Hilfe eines Piezoquarzkristalls erzeugt, an dem die Spitze der Lichtleitfaser befestigt ist. Die Lichtleitfaser leitet das Licht einer Lichtquelle, vorzugsweise eines Lasers, auf die Probenoberfläche und/oder Licht von der Probe zu einem Detektor, so daß die Probe mittels Rasternahfeldmikroskopie in Transmissions-oder in Reflexionsgeometrie untersucht werden kann. Die Abbildung der Probenoberfläche kann auf dem Fachmann bekannte Weise z. B. durch ein Polarisations-, Brechungsindex- oder Fluoreszenzkontrastverfahren erfolgen.

Um die Schwingungsbewegung der Lichtleitfaserspitze erfindungsgemäß detektieren zu können, ist es erforderlich, daß sowohl die vorgelegte Flüssigkeit als auch das Gefäß durchlässig für Licht der Wellenlänge der eingesetzten Lichtquelle sind.

Das Gefäß, das aus Glas, transparenten Polymeren oder anderen transparenten Materialien hergestellt sein kann, wird vorzugsweise so konstruiert, daß der Lichtstrahl zur Detektion der Schwingung möglichst senkrecht auf die Gefäßwandungen trifft. In der bevorzugten Ausgestaltung, in der der Lichtstrahl senkrecht zur Achse der ruhenden Lichtleitfaserspitze geführt wird, können also herkömmliche Gefäße aus z. B. Glas eingesetzt werden. Es sind keine speziell geformten Meßzellen erforderlich. Sie sollten derart konstruiert sein, daß zwei gegenüberliegende Gefaßwände lichtdurchlässig sind und senkrecht zum Detektionslichtstrahl stehen. Als Lichtquellen für den Detektionslichtstrahl dienen bevorzugt Laser, als Lichtdetektoren sind Photodioden geeignet. Die Ausrichtung des Lichtstrahls in der bevorzugten Ausführung parallel zur Probenoberfläche kann durch geeignete optische Umlenkvorrichtungen wie z. B. Prismen realisiert werden, die im Strahlenvorgang vor und/oder hinter der Lichtleitfaser vorzugsweise außerhalb des Flüssigkeitsgefäßes angeordnet sind.

Das die Probe und die vorgelegte Flüssigkeit enthaltende Gefäß kann so angeordnet sein, daß es senkrecht zur Lichtleitfaserachse verschoben werden kann, um das Abrastern eines Probenoberflächenbereichs zu ermöglichen. Es kann aber auch die eigentliche mikroskopische Anordnung mit der Lichtleitfaserspitze verschoben werden.

Die Erfindung bietet damit die folgenden Vorteile:

Im Gegensatz zu den im Stand der Technik angeführten Beispielen bei der Rasternahfeldmikroskopie kann erfindungsgemäß eine abstandsabhängige Veränderung des Schwingungssignals der Spitze bei einer Annäherung an die Probe in Flüssigkeiten auch dann detektiert werden, wenn die Probenoberfläche nicht glatt und reflektierend ist. Hierzu werden sowohl die Spitze als auch die Probe vollständig in die Flüssigkeit eingetaucht. Durch die beschriebene einfache Konstruktion eines hierfür geeigneten Flüssigkeitsgefäßes, das in den mikroskopischen Aufbau integriert wird, werden die Detektion der Schwingungsamplitude bzw. der Phasenverschiebung und somit die Regelung des Abstandes zwischen der Spitze und einer beliebigen Probe in nahezu jeder beliebigen Flüssigkeit ermöglicht. Somit sind nahfeldoptische Untersuchungen von beliebigen Probekörpern in einer Vielzahl von Flüssigkeiten durchführbar.

Der hierdurch erzielbare Vorteil liegt in der Möglichkeit der nahfeldoptischen Beobachtung beliebiger Proben in allen Flüssigkeiten, die ausreichend durchsichtig für die Wellenlänge des Lichts sind, das zur Detektion der Schwingung der Lichtleitfaser verwendet wird, und die Bauteile nicht angreifen. Im Vergleich mit dem Stand der Technik ist insbesondere der Vorteil darin zu sehen, daß gemäß der Erfindung keine Einschränkung hinsichtlich der Probenwahl besteht.

Die Erfindung ermöglicht durch die Messung in einer Flüssigkeit die Untersuchung des Einflusses verschiedener Flüssigkeitseigenschaften, wie z.B. Temperatur, pH-Wert, Zusammensetzung der Flüssigkeit, Strömungsverhältnisse u.a., auf die Probe mit der in der Rasternahfeldmikroskopie erzielbaren hohen Auflösung. Auf diese Weise lassen sich z. B. Korrosionsprozesse oder das Verhalten von quellbaren Oberflächen, wie Hydrogelen, direkt mitverfolgen.

In Kombination mit der o. g Fluoreszenzdetektion bei der Mikroskopie, wobei es sich hierbei um Eigenfluoreszenz oder um zuvor gebundene Fluoreszenzmarker handeln kann, können an der Flüssig- /Fest-Grenzfläche ablaufende Prozesse in situ abgebildet werden, auch wenn hierdurch die Probentopographie einer Veränderung unterliegt. Mit dem erfindungsgemäßen Verfahren läßt sich z. B. die Adsorption von Proteinschichten auch an Proben beobachten, die aufgrund ihrer rauhen Oberfläche Licht streuen. Durch die erstmalig mögliche zeitabhängige Aufnahme von Oberflächenbelegungen im wäßrigen Medium können Proteinanlagerungen und enzymatische Reaktionen an nichtidealen Oberflächen verfolgt werden, woraus sich neue Wege für die Sensor- und die Medizintechnik eröffnen.

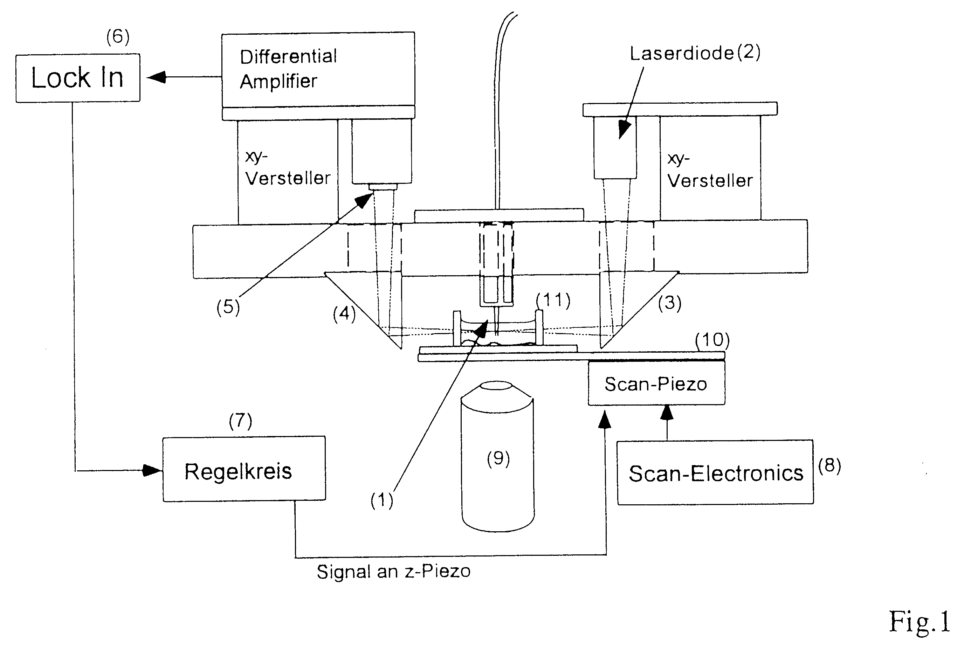

Dies läßt sich mit einer erfindungsgemäßen Vorrichtung realisieren, wie sie nachfolgend in einer bevorzugten Ausführung beschrieben wird: Fig. 1 zeigt den Aufbau des Rasternahfeldmikroskops mit dem Flüssigkeitsgefäß und den Einheiten, mit denen die Schwingung der Spitze gemessen und der Abstand eingestellt wird. Die ultradünne Spitze der Lichtleitfaser wird an ein Piezo-Röhrchen angeklebt (1), welches dazu verwendet wird, um die Spitze in Schwingung zu versetzen.

Das Licht einer beweglichen Laserdiode (2) wird mit einem Prisma (3) auf die Spitze fokussiert und das entstehende Beugungsbild hinter der Spitze wiederum mit einem Prisma (4) aufeine doppelte Photodiode (5) abgebildet. Das Differenzsignal der beiden Photodioden (5) enthält einen Gleichspannungs- und einen Wechselspannungsanteil.

Der Wechselspannungsanteil wird mit einem Lockin-Verstärker (6) detektiert und ist ein Maß für die Schwingungsamplitude. Dieses Signal wird als Regelgröße für einen Regelkreis (7) genutzt, der den Abstand über einen Piezoaktuator derart regelt, daß die Schwingungsamplitude konstant bleibt. Die Rasterelektronik (8) steuert das Rastern der Probenoberfläche und die Datenerfassung. Mit dem Mikroskopobjektiv (9) wird das von der Spitze ausgehende Licht gesammelt und auf den Detektor (nicht dargestellt) abgebildet. Das Mikroskopobjektiv soll andeuten, das im vorliegenden Fall der gesamte Aufbau in ein inverses Mikroskop integriert ist. Auf dem Trägerhalter (10) ist die Flüssigkeitszelle (11) zu sehen, in die die Spitze eintaucht. Die Zellwände sind planar, so daß die Abbildung des Lichtes der Laserdiode auf die Spitze nicht gestört wird.

Die Erfindung wird durch die nachfolgenden Beispiele näher erläutert, ohne darauf beschränkt zu sein:

### Beispiel 1:

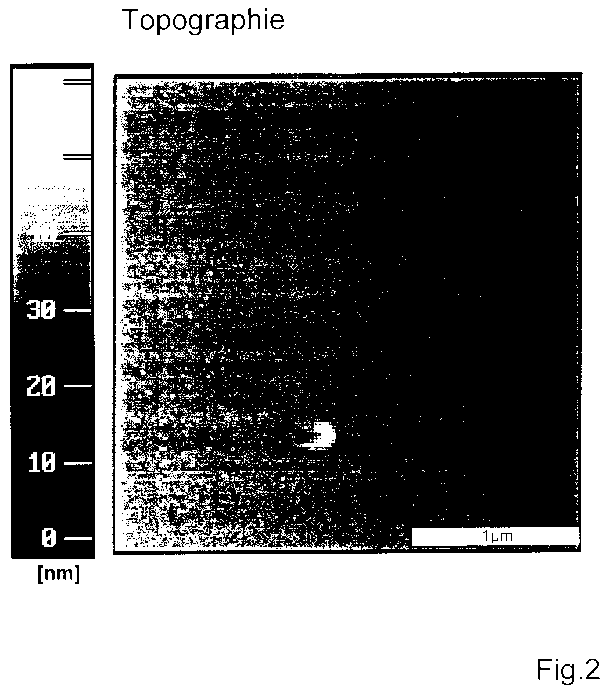

Polystyrol (PS) (Vestyron® 116 der Fa. HÜLS AG) wird in Tetrahydrofuran (THF) gelöst (10 Gew.-%). Die Lösung wird in die mit 2-Propanol im Ultraschallbad gereinigte Meßzelle aus Quarzglas gegeben, so daß der Boden mit einer ca. 2 mm dicken Schicht bedeckt ist. Nach vollständigem Verdampfen des Lösungsmittels verbleibt ein transparenter dünner PS-Film am Boden der Meßzelle. Die Zelle wird in das Mikroskop eingebaut und die Oberfläche des PS-Films zunächst an Luft betrachtet. Hierzu wird die Meßzelle derart justiert, daß die Reflexionen an den Zellwänden möglichst Klein sind, damit ein ausreichend großes Regelsignal gemessen werden kann. Dann wird die Spitze an die Zelle angenähert, bis eine Dämpfung der Schwingungsamplitude, wie bereits zuvor beschrieben, eintritt. Die Figuraufnahme erfolgt nun durch Rastern der Probe, derart, daß die Schwingungsamplitude der Spitze konstant gehalten wird. Fig. 2 zeigt eine Topographieaufnahme des oben beschriebenen Polystyrolfilms an Luft. Man erkennt deutlich die glatte Oberfläche des Films; die Rauhigkeit liegt unter 1 nm. Im unteren Teil der Figur ist eine Vertiefung von einigen hundert Nanometern Größe und etwa 40 nm Tiefe zu sehen.

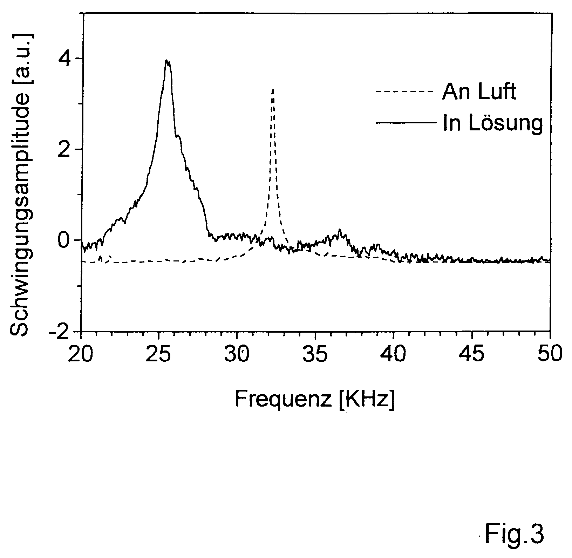

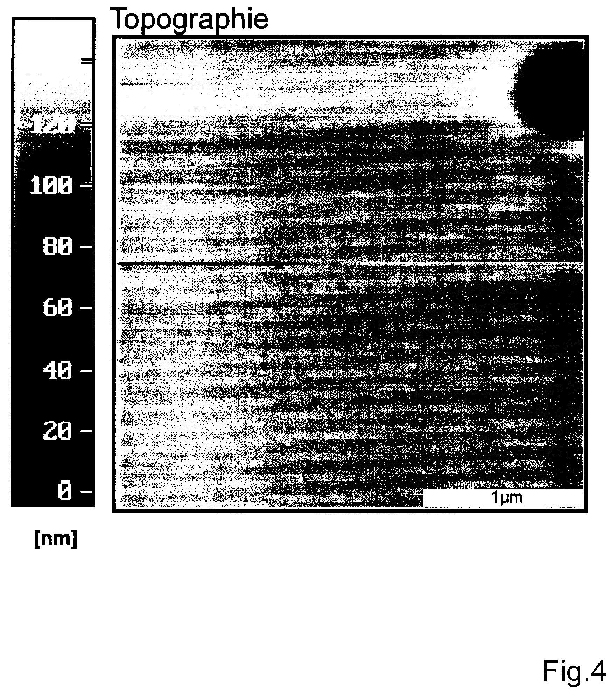

Es werden einige Milliliter Wasser in die Meßzelle gegeben, so daß sowohl die Probe, bestehend aus dem PS-Film, als auch die Spitze vollständig in die Flüssigkeit eingetaucht sind. Zunächst wird die Resonanzfrequenz der Spitze in Wasser bestimmt. Aufgrund der Viskosität des Wassers, wird die Resonanzfrequenz der Faserspitze zu kleineren Frequenzen hin verschoben. Der Effekt ist in Fig. 3 dargestellt. Dabei zeigt Kurve 1 den Resonanzverlauf der Faserspitze an Luft und Kurve 2 selbigen in Wasser. Fig. 4 zeigt eine Topographieaufnahme des Polystyrolfllms in Wasser. Man erkennt eine ähnliche Oberflächenstruktur wie an Luft. Der Film ist glatt im Rahmen von 1 nm und hat Vertiefungen von einigen hundert Nanometern Größe und einigen 10 nm Tiefe.

Anhand dieses Beispiels zeigt sich, daß mit dem erfindungsgemäßen Aufbau eine Topographiemessung in Flüssigkeiten mittels Detektion der Reibungskraft unter Verschiebung der Resonanzfrequenz der abtastenden Spitze ebenso wie an Luft möglich ist.

### Beispiel 2:

Der Boden einer Meßzelle wird, wie in Beispiel 1 beschrieben, mit einem transparenten PS-Film bedeckt. Es werden einige Milliliter einer Lösung von Fluoresceinisothiocyanat-gelabeltem Human Serum Albumin (Fa. SIGMA, Deisenhofen) in Phosphatpuffer (pH = 7,4; PBS-Tabletten der Fa. SIGMA) in die Meßzelle gegeben. Hierbei ist wiederum darauf zu achten, daß sowohl die Probe als auch die Spitze vollständig in die Flüssigkeit eintauchen.

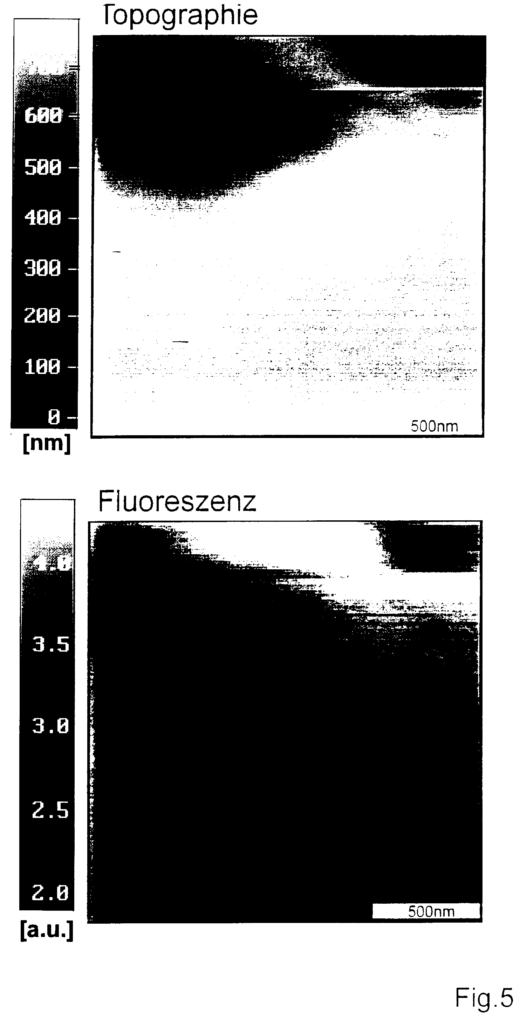

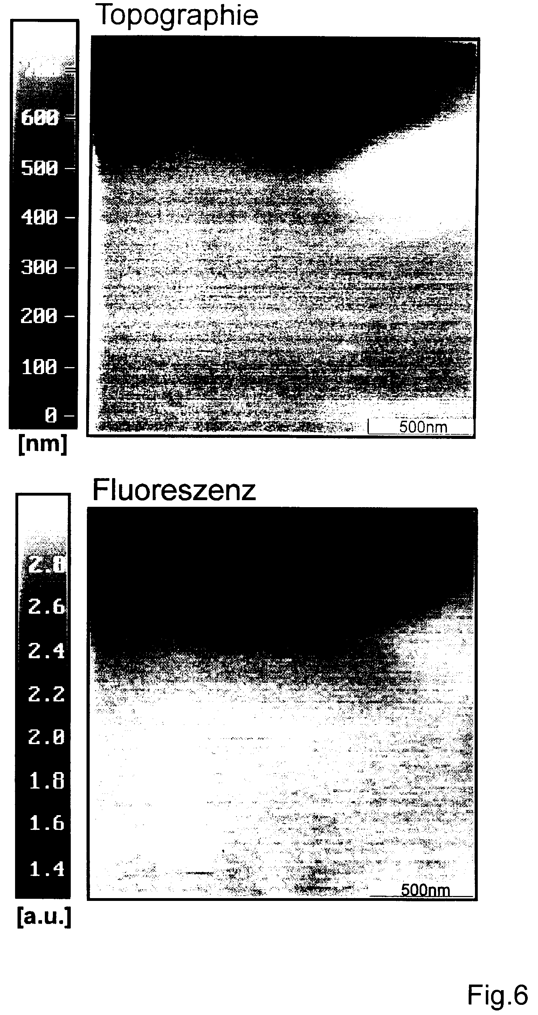

Fig. 5 zeigt die Topographie und die simultan gemessene Fluoreszenz der an die Probe adsorbierten, fluoreszenzgelabelten Proteine. Man erkennt eine deutliche Korrelation zwischen der Topographie der Oberfläche und der räumlich aufgelösten Fluoreszenz. Fig. 6 zeigt ebenfalls die Topographie und die simultan gemessene Fluoreszenz der gleichen Stelle an einem späteren Zeitpunkt. Im unteren Teil der Figur zeigt sich, daß sich der Kontrast in der ortsaufgelösten Fluoreszenz verringert. Dies ist durch die fortschreitende Adsorption der Proteine an die Oberfläche bedingt, so daß diese homogener bedeckt wird.

Das Beispiel zeigt, daß mit dem erfindungsgemäßen Aufbau ortsaufgelöste Mikroskopie in Flüssigkeiten mit einer Auflösung im Bereich von etwa 50 nm möglich ist. Das Beispiel zeigt außerdem, daß mit der Methode zeitlich auftretende Veränderungen der Probe beobachtbar sind.

### Beispiel 3:

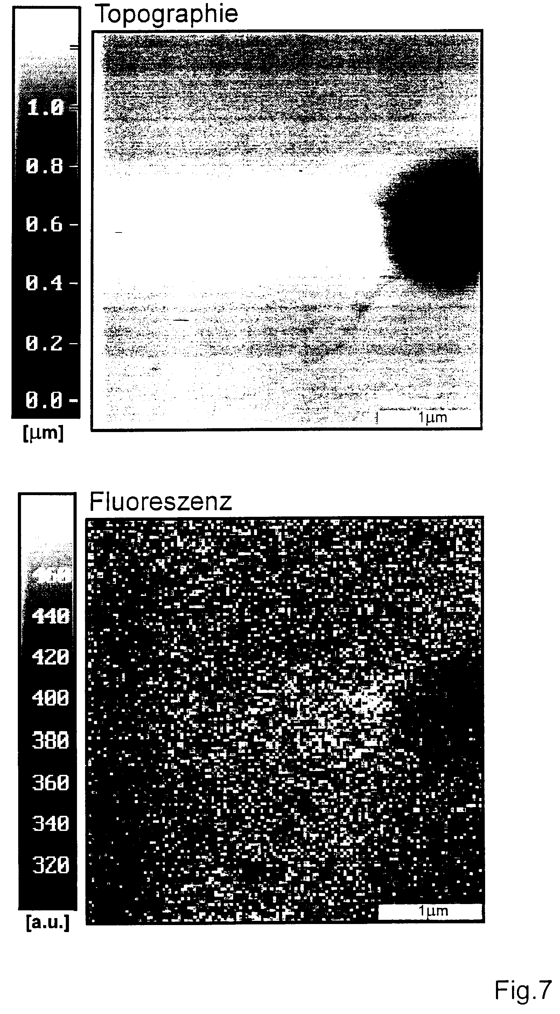

Es wird das in Beispiel 2 beschriebene System benutzt und die die fluoreszenzgelabelten Proteine enthaltende Pufferlösung in der Meßzelle wird gegen reine Pufferlösung ausgetauscht. Fig. 7 zeigt die nahfeldoptische Untersuchung der Oberfläche in Pufferlösung. Die Aufnahmen weisen eine erheblich niedrigere Fluoreszenzrate auf der glatten Oberfläche im Gegensatz zur Messung aus Beispiel 2 auf, was darauf hinweist, daß ein Teil der Proteine beim Spülen entfernt wurde. Auch in diesem Experiment wurde in der Vertiefung weniger Fluoreszenz als auf der glatten Oberfläche gemessen. Das Beispiel belegt, daß mit in der Erfindung beschriebenen Aufbau in Flüssigkeiten hochaufgelöste Mikroskopie betrieben werden kann.

## Patentansprüche

1. Verfahren zur optischen Rasternahfeldmikroskopie an Probekörpern in Flüssigkeiten unter Verwendung einer lateral schwingenden, in die Flüssigkeit eintauchenden Lichtleitfaserspitze, deren Abstand von der zu untersuchenden Probenoberfläche durch Detektion der Schwingungsbewegung der Lichtleitfaserspitze geregelt wird,
dadurch gekennzeichnet,
daß der Lichtstrahl einer Lichtquelle ohne Reflexion an der Probenoberfläche durch ein die vorgelegte Probe und die Flüssigkeit enthaltendes Gefäß geleitet wird, wobei er aufdie Spitze der Lichtleitfaser fokussiert ist, und daß die Schwingungsbewegung der Spitze anhand des Beugungsbildes des Lichtstrahls hinter der Spitze mittels eines Lichtdetektors detektiert wird, wobei die vorgelegte Flüssigkeit und das Gefäß durchlässig für Licht der Wellenlänge der eingesetzten Lichtquelle sind.

2. Verfahren nach Anspruch 1,
dadurch gekennzeichnet,
daß die detektierte Schwingungsamplitude der Lichtleitfaserspitze als Regelgröße für die Abstandregelung dient.

3. Verfahren nach Anspruch 1 oder 2,
dadurch gekennzeichnet,
daß die Lichtleitfaser das Licht einer Lichtquelle auf die Probenoberfläche leitet oder Licht von der Probe zu einem Detektor leitet oder beides.

4. Verfahren nach mindestens einem der vorherigen Ansprüche,
dadurch gekennzeichnet,
daß die Lichtleitfaser über ein Piezo-Quarzelement zu lateralen Schwingungen angeregt wird.

5. Verfahren nach mindestens einem der vorherigen Ansprüche,
dadurch gekennzeichnet,
daß die Probe in Transmission oder in Reflexion untersucht wird.

6. Verfahren nach mindestens einem der vorherigen Ansprüche,
dadurch gekennzeichnet,
daß eine Abbildung der Probenoberfläche durch ein Polarisations-, Brechungsindex-oder Fluoreszenzkontrastverfahren erstellt wird.

7. Verfahren nach zumindest einem der Ansprüche 1 bis 6 zur Erkennung in situ von durch die Flüssigkeit an der Probenoberfläche hervorgerufenen Veränderungen.

8. Verfahren nach zumindest einem der Ansprüche 1 bis 6 zur Verfolgung von Adsorptionsprozessen an der Probenoberfläche in situ.

9. Vorrichtung zur optischen Rasternahfeldmikroskopie an Probekörpern in Flüssigkeiten in einer Flüssigkeitszelle unter Verwendung einer lateral schwingenden, in die Flüssigkeit eintauchenden Lichtleitfaserspitze, wobei der Abstand zwischen Spitze und Probenoberfläche durch Detektion der Schwingungsbewegung der Spitze geregelt wird,
gekennzeichnet durch
- eine Lichtquelle, deren Licht ohne Reflexion an der Probenoberfläche durch das Gefäß geleitet wird und dabei auf die Spitze der Lichtleitfaser fokussiert ist, sowie
- einen Lichtdetektor, der das hinter der schwingenden Spitze entstehende Beugungsbild detektiert,
wobei die Flüssigkeit und das Gefäß durchlässig für Licht der Wellenlänge der eingesetzten Lichtquelle sind.

10. Vorrichtung nach Anspruch 9,
gekennzeichnet durch optische Einrichtungen zur Umlenkung und/oder Fokussierung oder Aufweitung des durch die Flüssigkeit geleiteten Lichts.

11. Vorrichtung nach Anspruch 9 oder 10,
gekennzeichnet durch eine einfache oder doppelte Photodiode als Lichtdetektor.

12. Vorrichtung nach zumindest einem der Ansprüche 9 bis 11,
gekennzeichnet durch eine Laserdiode als Lichtquelle.

13. Vorrichtung nach zumindest einem der Ansprüche 9 bis 12,
dadurch gekennzeichnet,
daß die Lichtleitfaser zur Anfachung der Schwingung an einem Piezo-Quarzelement befestigt ist.

14. Verwendung der Vorrichtung nach den Ansprüchen 9 bis 13 zur Verfolgung von durch die Flüssigkeit an der Probenoberfläche hervorgerufenen Veränderung oder von Adsorptionsprozessen an der Probenoberfläche in situ.
